# EUROPEAN PATENT APPLICATION

(11) **EP 1 796 328 A1**
(43) Date of publication of application: **13.06.2007**
(21) Application number: 05792149.6
(22) Date of filing: 27.09.2005
(51) Int. Cl.: H04L 12/56

(54) **A RING NETWORK AND A METHOD FOR IMPLEMENTING THE SERVICE THEREOF**

(30) Priority: 27.09.2004 CN 200410080928
(71) Applicant: Huawei Technologies Co., Ltd., Longgang District, Shenzhen Guangdong 518129 (CN)
(72) Inventor: WANG, Yuxiang, Huawei Administration Building, Shenzhen, Guangdong 518129 (CN); WAN, Huaixue, Huawei Administration Building, Shenzhen, Guangdong 518129 (CN); ZENG, Li, Huawei Administration Building, Shenzhen, Guangdong 518129 (CN)
(74) Representative: Dilg, Andreas
(86) International application number: PCT/CN2005/001580
(87) International publication number: WO 2006/034644

(57) **Abstract**

This invention discloses a ring network and a method for implementing the service thereof. The ring network includes multiple nodes in a same logic layer for accessing a service to the ring network or receiving a service from the ring network; two virtual channels of reverse directions, which connect the adjacent nodes and are utilized to bear and adapt service data; a physical link, which is utilized to bear the service data adapted to the virtual channel. The method includes the steps of configuring virtual channels at the nodes to form an eastward and westward bidirectional ring network; establishing service Label Switching Path schedules at the nodes; determining a service sink node according to the Label Switching Path schedule at a service source node; dispatching services up to the ring network according to a predetermined algorithm; multiplexing the services of different nodes in a same virtual channel for transmission in the way of Label Switching Path; dispatching the services down the ring network at the service sink node.

## Description

### Field of the Invention

The present invention relates to the field of the network communication technology, and more particularly, to a ring network and a method for implementing the service thereof.

### Background of the Invention

With the flourish of the Internet, a higher requirement for the network applications is brought up. MPLS (Multiple Protocol Label Switching) technology is a new technology which was originally presented to solve the problems in an IP network, such as, forwarding speed of packets, the guarantee of QoS (Quality of Service) and traffic engineering. The MPLS absorbs some ideas of VPI/VCI (Virtual Path identifier /Virtual Circuit Identifier) switching of ATM (Asynchronous Transfer Mode), and is a seamless integration of the flexibility of IP routing technology and the simplification of the two-layer-switching, so that the connection Oriented attributes of MPLS are appended to the non-connection oriented IP network. Also, with the method of establishing an LSP (Label Switching Path) by MPLS, the IP network has some new means for management and operation. With the rapidly increasing requirement for data services in the recent years, MPLS technology is becoming gradually a mainstream technology of data network resolution, because of its perfect performance in the capability of supporting multiple services/protocols, MPLS L3/L2 VPN (virtual Private Network) and traffic engineering, etc., and is expanding from the core layer of network to the convergence layer and the access layer.

The essence of the MPLS protocol is the introduction of the concept of Label, i.e. a short information content that is easy to handle, contains no topology information, and has only a local meaning. A Label is short so that it may be processed readily; usually it can be referred to directly by the index. It has only a local meaning so that it is convenient to be assigned. The basic feature of MPLS technology lies in that, the edge router assigns a label for each packet entering the MPLS domain according to the stream classification of the packet. Then, upon the receipt of such a labeled packet, each of the MPLS routers will forward the packet according to the label, and change the label into a new label which is agreed by this router itself with the next router, and so on, until the labeled packet is sent once again as an IP packet when it leaves the MPLS field. As the labeled packet leaves the MPLS field, the Label will be removed by an edge router. The QoS (service of Quality) type of an MPLS packet can be determined by an MPLS edge router according to the various parameters of IP packet, such as, the source address, the destination number, the port number, the TOS (Type Of Service) value of IP, etc. For example, for the IP packets which reach the same destination, different forwarding paths can be established according to the requirements of their TOS values, so as to meet their requirement for the transmission quality. The problem of load balance and congestion can also be solved effectively via the management for special routers. For example, when there is congestion in the network, a new forwarding route may be established by MPLS to partake the traffic, thereby the network congestion may be relieved.

At present, the mainstream MPLS encapsulation in the industry is the Martini encapsulation, which is defined in the IETF draft "draft-martini-12circuit-encap-mpls-04". An MPLS frame with a Martini encapsulation includes two layers of labels, in which the outer layer is a Tunnel label, and the inner layer is a VC label (Virtual Container label). The label stack can be nested indefinitely so as to provide indefinite service support capability.

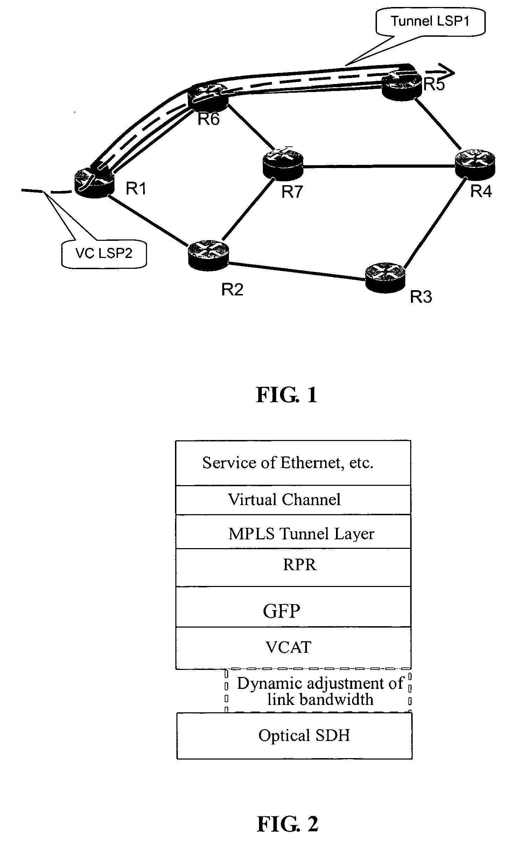

As shown in FIG.1, the tunnel LSP1 is a pipe LSP between R1 and R5, the Label Switching Path is designated as 10(R1/R6) -> 20(R6/R5), and R6 implements only the tunnel label switching; the VC(Virtual Container) label LSP2 is a service LSP between R1 and R5, the Label Switching Path is 10.01(R1/R6)->20.01(R6/R5), R6 implements only the tunnel label switching, and the label of inner layer is transparent to R6.

The MPLS LSP usually adopts 1+1 or 1:1 protection technology, and the protection of LSP is an end-to-end protection. With this protection mode, the protection of service can be accomplished effectively. However, this protection mode also has certain disadvantages:

A) For an MPLS network, if the services among all the nodes in the network are 1+1 or 1:1 protected, a working LSP and a protection LSP need to be established respectively between any two nodes of all the nodes, that is, there are a mesh connection of the working LSP and a mesh connection of the protection LSP. The problem of square-of-N exists in both of the working LSP and the protection LSP, so that the network is required to configure and maintain a great amount of LSP information when there are a relatively large number of network nodes;

B) The protection which is implemented by utilizing MPLS OAM function is a passive protection, that is, the sink end of service detects the OAM frames, such as CV, FDI etc., continuously, and if the lost of CV is discovered consecutively or FDI error is received repeatedly, the LSP is considered as failure. Since OAM is an in-band transmission which may occupy LSP bandwidth, the OAM frames can not be sent in real time, and the transmitting frequency should not be very high. As a result, the fault can not be discovered in time, and the requirement of protection switching at the telecommunication level can not be met;

C) The 1+1 protection is a mode of dual-fed single selection, which may cause the low utilization of network bandwidth.

To provide a better network architecture and enable a better QOS (Quality of Service) and protection function for the service, the RPR (Resilient Packet Ring) technology provides an appropriate solution.

RPR has a dual-ring topology: there are two paths between each pair of nodes, which guarantees a high availability. A space reuse mechanism is adopted for the loop bandwidth, the uni-cast data can be transmitted simultaneously in different parts of the ring, thereby the utilization of loop bandwidth is improved.

The RPR ring network can support a rapid protection of 50ms: two protection mechanisms are employed in the RPR ring network, one is the Steering mode, wherein the switching is implemented directly on the source node of the service, thus ensuring that the service goes along an optimum path. The other protection mechanism is the Wrapping mode, wherein a loop-back is made at the two nodes in which the failure occurs. This Wrapping mode is similar to the 2 fiber MS-SPRing(Manual Switch, Shared Section Protection Ring) of SDH(Synchronous Digital Hierarchy).

The RPR technology is an MAC (Media Access Control) layer protocol which optimizes the transmission of data service on the ring-shaped architecture, and it can be applicable to various physical layers. With RPR, data of a variety of services, such as voice and image and the like, can be transmitted. The RPR integrates the economy, flexibility and extensibility of Ethernet, absorbs the advantages of 50ms prompt protection of SDH ring network, and has the functions such as automatic discovery of network topology, sharing of loop bandwidth, fair allocation and strict COS (Class of Service), etc..

However, the RPR technology also has limitations in its applications. Since the IEEE 802.17 specification is an RPR MAC layer technology designed for single physical ring or logic ring (formed by Virtual Container (VC) channel across multiple SDH physical rings), the application of RPR is limited to the single ring, and has to be terminated across rings. That is, the end-to-end bandwidth sharing, the fair mechanism, QoS (Quality of Service) and the protection function can not be implemented for inter-ring services.

At present, in the conventional methods, a two-layer or three-layer exchange is introduced in the egress and ingress of a ring, or between multiple rings, in order to solve the problem of service intercommunication between rings when the RPR rings are intersected or tangent. This makes the network more complicated, and the network architecture not clear. Another solution is to adopt MPLS over RPR (Resilient Packet Ring bears Multiple Protocol Label Switching) to obviate the disadvantages of RPR, however, in this way, two layers are introduced: the RPR layer and the MPLS layer, as shown in FIG.2, thus the complexity of service processing is increased and the processing efficiency is lowered. Also, since the frame format of an RPR ring network is a special format, the introduction of MPLS layer may increase the overhead of each data packet, thus reducing the utilization of bandwidth. In addition, the RPR protection ring can be established based on only the physical links or the sub-channels, therefore, the networking is not flexible, the service provision is slow, and it is not suitable for constructing a large-sized network.

### Summary of the Invention

The embodiments of the present invention provide a ring network and a method for implementing the service thereof, so as to overcome the disadvantage of RPR network in the prior art, so that the intercommunication of the inter-ring services may be achieved, and a better QoS protection and richer SLA (Service Level Agreement) may be provided.

The embodiments of the present invention are implemented by the following technical solutions:

A ring network, which includes: multiple nodes in a same logic layer, for accessing a service to the ring network or receiving a service from the ring network; two virtual channels of reverse directions, which connect the adjacent nodes and are utilized to bear and adapt service data; a physical link, which is utilized to bear the service data adapted to the virtual channel.

Preferably, the virtual channel is a Label Switching Path (LSP) based on Multiple Protocol Label Switching (MPLS).

The virtual channel can also be a virtual channel connection of Asynchronous Transfer Mode (ATM).

The nodes adapt the service data, which is borne and adapted to the virtual channel, to the physical link via Ethernet MAC (Media Access Control) protocol, GFP(Generic Framing Protocol), LASP (Link Access Procedure) or HDLC (High Speed Digital Link Control) connection.

The physical link may include an Ethernet link, a Synchronous Data Network link, an Optical Transport Network link and a Virtual Concatenation Group.

The physical link may be located in a ring network and/or intersected rings and/or a mesh network.

The service may include an internet service, an Ethernet service and an ATM (Asynchronous Transfer Mode) service.

Preferably, the encapsulation format of the service data accessed or received by the nodes may be the standard format of MPLS.

A method for implementing the service of the ring network, the ring network includes multiple nodes in a same logic layer, for accessing a service to the ring network or receiving a service from the ring network; two virtual channels of reverse directions, which connect the adjacent nodes and are utilized to bear and adapt service data;; a physical link, which is utilized to bear the service data adapted to the virtual channel; wherein, the method includes:
A. configuring the virtual channels at the nodes to form an eastward and westward bidirectional ring network;
B. establishing service Label Switching Path schedules at the nodes;
C. determining a service sink node according to the Label Switching Path schedule at a service source node;
D. dispatching services up to the ring network according to a predetermined algorithm;
E. multiplexing the services of different nodes in a same virtual channel for transmission in the way of Label Switching Path;
F. dispatching the services down the ring network at the service sink node.

The method may further include the process of performing a Wrapping protection and/or a Steering protection for the ring network.

The step A may further include the process of binding the virtual channels to the corresponding ring networks..

The step B may include the process of configuring and maintaining the service Label Switching Path schedules statically and/or dynamically..

The process of configuring and maintaining the service Label Switching Path schedules dynamically comprises: configuring and maintaining the service Label Switching Path schedules by utilizing the Label Distribution Protocol and the Resource Reservation Protocol.

The service Label Switching Path schedule may include the label action information and the destination port information.

The step C may also include the process of implementing Multiple Protocol Label Switching (MPLS) encapsulation of a non-MPLS service.

The predetermined rule includes:
classifying the non-MPLS (Multiple Protocol Label Switching) service packet into different Forwarding Equivalence Classes (FEC) according to destination address, inserting an appropriate label into the header of the packet according to Forwarding Equivalence Class (FEC) to which the packet belongs, and accomplishing the MPLS(Multiple Protocol Label Switching) encapsulation;
classifying the non-MPLS (Multiple Protocol Label Switching) service packet into different Forwarding Equivalence Classes (FEC) according to the requirement of Quality of Service, inserting an appropriate label into the header of the packet according to Forwarding Equivalence Class (FEC) to which the packet belongs, and accomplishing the MPLS(Multiple Protocol Label Switching) encapsulation.

The predetermined algorithm may include the strict priority scheduling method.

The method may further include: adopting 1:1 and/or 1+1 protection of the service Label Switching Path for a service inside the ring and an inter-ring service.

The method may further include :
performing a stream classification to a service, which enters the ring locally, at the source node;
filling the EXP (experiment) field of MPLS(Multiple Protocol Label Switching) according to the level of stream class; and
dispatching the service, which enters the ring locally, to corresponding outlet port queue for transmission, according to the priority indicated by the EXP field.

The information of the stream class may include: priority field of the virtual local network service, and/or service type field of Internet Protocol service, and/or priority specified by an administrator.

The method may further include:
establishing a private Label Switching Path between the adjacent nodes on the ring network for transmission of fair algorithm protocol information;
observing utilization condition of the link which is connected to each of the nodes on the ring network by the MAC(Media Access Control) layer of this node, and notifying all the nodes on the ring network of the observed condition; and
adjusting the rate of data, which is sent from each of the nodes on the ring network to the ring network, by this node according to the fair algorithm protocol and the obtained notice.

It can be seen from the above, that the technical solutions according to the embodiments of the present invention are based on MPLS technology, so that the ring network not only has all the functions of RPR ring network, but also has some advantages over RPR ring network, for example, the ring network can be built up in the networks which are implemented by various physical technologies, without dependency on a particular technology; the virtual/physical or logic MPLS ring network can be built up without any dependence on the physical network topology, so that the implementation may be more flexible and prompt, and the speed for starting a service may be improved, especially for the VPN(Virtual Private Network)service; the number of the layers of this virtual MPLS network is one less than that of RPR, so that it is simpler in processing, which makes the configuration of the service simpler and clearer, so that the protection speed and the efficiency of the service may be enhanced; this network employs the standard MPLS frame format, which enables the service to be independent of the ring, so that the inter-ring end-to-end service provision and the service inter-communication when multiple rings are intersected/tangency over the ring network of the present invention can be implemented without any other auxiliary technology, and the utilization of the network bandwidth may be improved; all the service LSPs on the ring network of the present invention are enabled to define different QoS parameters, so that the supported SLAs are richer, and differentiated QoS may be guaranteed and supported in a better manner by scheduling the LSP grain according to the pre-negotiated parameters; since the bearer mode of service in this ring network is LSP which belongs to the connection-Oriented technology, the OAM(Operation and Maintenance) functions, such as, the LSP CV (Connectivity Verification), LSP FFD (Fast Failure Detect), FDI (Forward Defect Indication) and BDI (Backward Defect Indication) etc., can be utilized adequately so as to detect and maintain the service effectively.

### Brief Description of the Drawings

FIG.1 is a schematic diagram of an MPLS network;

FIG.2 is a schematic diagram of the layered structure of an RPR ring network according to the prior art;

FIG.3 is a topology diagram of a ring network according to an embodiment of the present invention;

FIG.4 is a schematic diagram of the layered structure of a ring network according to an embodiment of the present invention;

FIG.5 is a schematic diagram of the architecture of the ring network shown in FIG.4 when this ring network takes MPLS LSP as the virtual channel multiplexing layer;

FIG.6 is a schematic diagram illustrating the different physical networking modes of a ring network according to an embodiment of the present invention;

FIG.7 is a diagram illustrating the simplified architecture of an MPLS ring network which is formed by the network shown in FIG.6 via the configuration of LSP;

FIG.8 is a diagram illustrating the network topology of a ring network according to an embodiment of the present invention, in which an SDH/SONET is employed as the bearer layer;

FIG.9 is a schematic diagram illustrating the layered structure of the ring network shown in FIG.8;

FIG. 10 is a diagram illustrating the network topology of a ring network according to an embodiment of the present invention, in which an Ethernet is employed as the bearer layer;

FIG.11 is a schematic diagram illustrating the layered structure of the ring network shown in FIG. 10;

FIG.12 is a flow diagram illustrating the method for service implementation of a ring network according to an embodiment of the present invention;

FIG.13 is a schematic diagram illustrating the implementation of service going up/down a ring network according to an embodiment of the present invention;

FIG.14 is a schematic diagram illustrating the implementation of an inter-ring service going up/down the network according to an embodiment of the present invention;

FIG.15 is a schematic diagram illustrating the protection of an inter-ring service according to an embodiment of the present invention;

FIG.16 is a diagram illustrating the procedure for implementing a network-based protection with a Wrapping mode according to an embodiment of the present invention;

FIG.17 is a diagram illustrating the procedure for implementing a network-based protection with a Steering mode according to an embodiment of the present invention.

### Detailed Description of the Preferred Embodiments

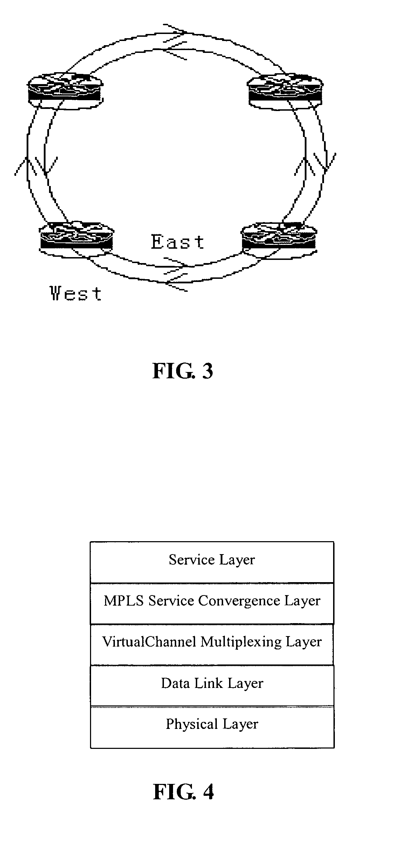

In the present invention, the MPLS technology is utilized to construct a virtual MPLS ring network, that is, a ring network technology which has no dependency on the physical topology and the particular physical layer. A dual-channel bidirectional ring network is composed of multiple nodes on a same logic layer. The topologic architecture of a virtual ring network is shown in FIG.3, the virtual ring network includes:

Multiple nodes on the same logic layer, which are adapted to access a service to the ring network or receive a service from the ring network; two virtual channels of reverse directions, which connect the adjacent nodes and are utilized to transmit the service data between the nodes; a physical link, which is utilized to bear the service data.

The two virtual channels form two rings of reverse directions: a westward ring and a eastward ring. A service is transmitted clockwise on the westward ring and is transmitted anti-clockwise on the eastward ring. The service traffic accessed or received by the nodes on the rings is in the standard MPLS frame structure, so the frame format need not be redefined. The virtual channel bears the service data of different nodes in the way of LSP(Label Switching Path). Each node identifies whether a service is a local service via the MPLS label of the service; and if so, the service will be stripped off; otherwise the service will be transmitted to the next adjacent node via the virtual channel.

The virtual channel can be established with a variety of techniques, for example, it may be established via Label Switching Path, or via other VPN(virtual Private Network) private line technologies, such as VPC(Virtual Path Connection) of ATM, etc.

The network layered structure of this virtual ring network is shown in FIG.4:

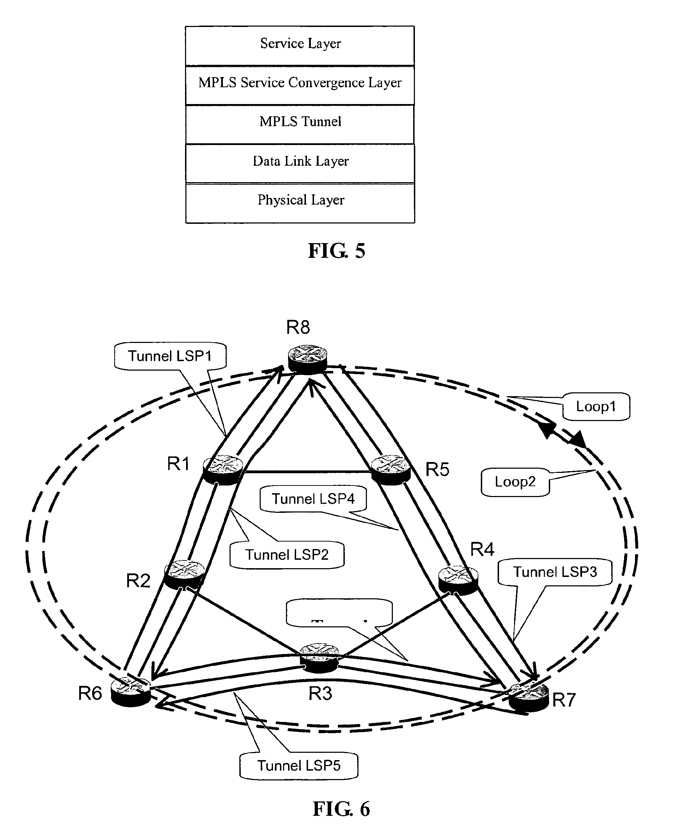

The MPLS technology is employed in MPLS service convergence layer, in which the access, transmission, convergence and multiplexing of a service is implemented via the service LSP. The virtual channel multiplexing layer can adopt, but not be limited to, the MPLS technology. The network layered structure, in which LSP is employed as the virtual channel in establishment of the MPLS ring network of the present invention, or as the bearer layer of the MPLS ring network, is shown in FIG.5. The virtual channel layer can be omitted, in which case, the bearer layer of the virtual MPLS ring network becomes the data link layer, so that the virtual ring network evolves into an MPLS ring network which is based on the physical link or logic sub-channel, such as the MPLS ring network based on GE (Giga-Ethernet) connection, or the MPLS ring network based on VCG (Virtual Concatenation Group) connection.

A variety of services, such as IP (Internet) service, ETH (Ethernet) service, ATM (Asynchronous Transfer Mode) service, etc., can be accessed to the service layer.

In the MPLS service layer, the MPLS technology is utilized for the convergence and multiplexing of services, in which the standard MPLS frame format is adopted, so as to guarantee the service inter-communication with the existing MPLS networks, and also the inter-communication between inter-ring services.

The data link layer adopts, but is not limited to, the data link layer technologies, such as Ethernet MAC (Media Access Control), GFP (Generic Framing Protocol), LASP (Link Access Procedure) and HDLC (High speed Digital Link Control), etc. That is, the nodes on the ring network can connect and adapt the service data transmitted on the virtual channel to the physical links via the Ethernet MAC protocol, GFP, LAPS and HDLC, etc. The ring network according to the embodiment of the present invention is independent of the data link layer.

In addition, the ring network according to an embodiment of the present invention is not dependent on the physical layer. A variety of physical layer technologies, such as, the Ethernet technology, POS (Packet over SDH, the Packet Switching based on the transmission network) technology, or VCAT (Virtual Concatenation) technology of EOS (Ethernet over SDH, Ethernet based on the transmission network) technology, can be selected according to the requirement.

In the POS, the IP data packet is encapsulated via PPP (Point-to-Point Protocol) protocol, mapped into the SDH/SONET (Synchronous Digital Hierarchy/ Synchronous Optical Networking) frame by utilizing the HDLC frame format, and transmitted consecutively at a corresponding line speed. The POS keeps the non-connection-oriented characteristics of IP. The PPP protocol provides the functions such as Multiple Protocol Encapsulation, Error Control and link initialization control etc.; the HDLC is responsible for the definition of the IP data frame encapsulated on the synchronous transmission link. With the PPP protocol, an IP data packet can be divided into PPP frames so as to satisfy the requirement of mapping them into the SDH/SONET frame structure.

In the EOS, a mapping approach for encapsulating and mapping an Ethernet frame into the VC(Virtual Container) of SDH/SONET is defined. The EOS encapsulation is taken as a data link adaptation layer which is between the Ethernet MAC layer and SDH of the physical layer. The encapsulation modes mainly include PPP/HDLC, LAPS and GFP.

Those skilled in the art will appreciate that, a conventional MPLS LSP is an end-to-end "connection" or "virtual channel", and the MPLS LSP is taken as the virtual channel which connects every node on the ring network, and allocates a certain bandwidth for these channels, thus forming the virtual ring network, i.e. the ring network according to the embodiment of the present invention. This mode is not related with the physical networking, and can go beyond the limitation of the physical networks. The physical networks can be a ring network, intersected rings, a mesh network and the like.

The different physical networking modes according to the embodiments of the present invention are shown in FIG.6:

The Tunnel LSP1 (passing through R2, R1) between R6/R8, the Tunnel LSP3 (passing through R5, R4) between R7/R8 and the Tunnel LSP5 (passing through R3) between R6/R7 may be configured into a westward ring Loop1 via the management software (manually or automatically). Also, the Tunnel LSP2 (passing through R2, R1) between R6/R8, the Tunnel LSP4 (passing through R5, R4) between R8/R7 and the Tunnel LSP6 (passing through R3) between R6/R7 may be configured into an eastward ring Loop2 via the management software (manually or automatically). One of the advantages of establishing a virtual MPLS ring network with Tunnel LSPs lies in that, it is not limited by the port resources, and adequate MPLS ring networks can be constructed in the network according to the services. For example, in an existing MPLS network, if the bandwidth resources allow, several LSPs between the relevant nodes may be configured as the virtual channel, then the service with self-healing protection function between these nodes may be started promptly. The service provision may be simple and prompt.

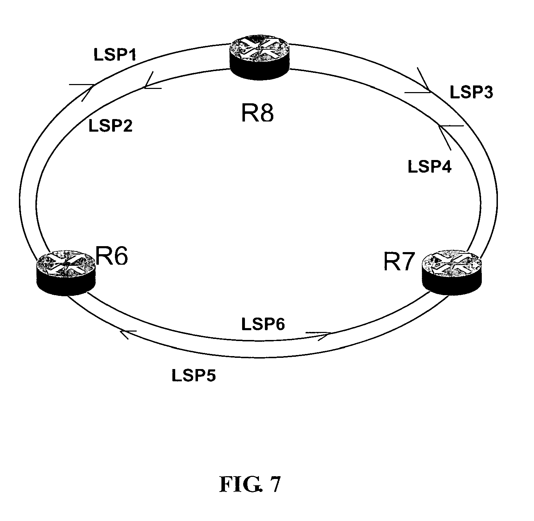

The virtual MPLS ring network in FIG.6 can be simplified into the architecture shown in FIG.7. The three network elements R6, R7 and R8 are not physically adjacent, but can be configured into a virtual MPLS Ring via the tunnels LSPI-LSP6; wherein, LSP1, LSP3 and LSP5 form a westward ring in which a service is transmitted clockwise; and LSP2, LSP4 and LSP6 form an eastward ring in which a service is transmitted anticlockwise. The service between these three network elements is borne into the tunnel LSP via the service LSP.

As described above, the virtual channel multiplexing layer of the ring network according to the embodiments of the present invention is unnecessary, at this time, the bearer layer of the MPLS ring becomes a data link layer, and the channel can be a physical link or a sub-tunnel. The channel bandwidth of the MPLS ring will not be multiplexed again.

For example, in an SDH/SONET network, a dual-channel bidirectional mesh network can be constructed with the VCG as the channel. The adjacent nodes are connected by two VCG channels in reverse directions, which constitute two VCG rings in reverse directions. The two rings are called the westward ring and the eastward ring respectively. A service is transmitted clockwise on the westward ring, and transmitted anticlockwise on the eastward ring. The services transmitted on the rings are borne in the way of MPLS Label Switching Path.

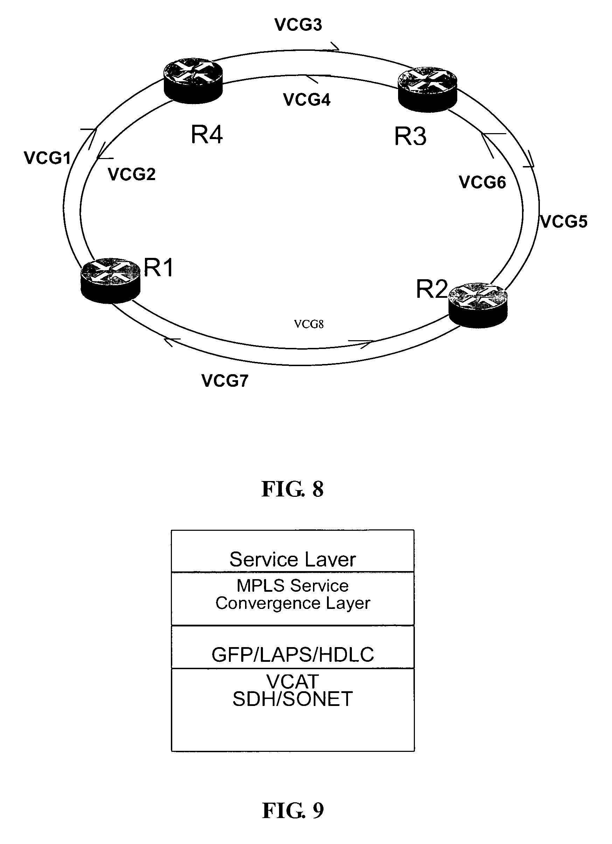

As shown in FIG.8: VCG1, VCG3, VCG5 and VCG7 constitute a westward ring in which a service is transmitted clockwise; VCG2, VCG4, VCG6 and VCG8 constitute an eastward ring in which a service is transmitted anticlockwise. The ring network layer structure of this technology is shown in FIG.9. The SDH and the virtual concatenation together constitute the physical layer of the virtual MPLS ring network, and the data link layer adopts GFP or LAPS/HDLC to form the bearer layer of the MPLS ring network.

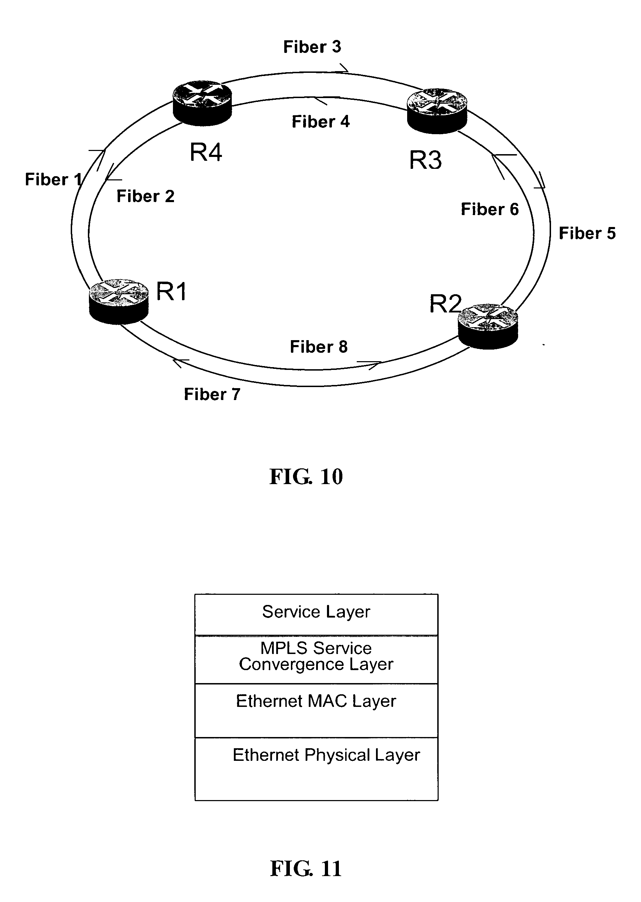

An Ethernet can also be utilized as the bearer layer of the virtual MPLS ring network directly. For example, the nodes are connected into a two-fiber bidirectional ring-shaped architecture with the GE ports of the routers. In the westward ring, a service is transmitted clockwise, and in the eastward ring, a service is transmitted anticlockwise, as shown in FIG.10. The ring network layer structure of this technology is shown in FIG.11. The Ethernet MAC layer forms the physical layer of the virtual MPLS ring network, and the data link layer adopts GFP or LAPS/HDLC to form the bearer layer of the MPLS ring network.

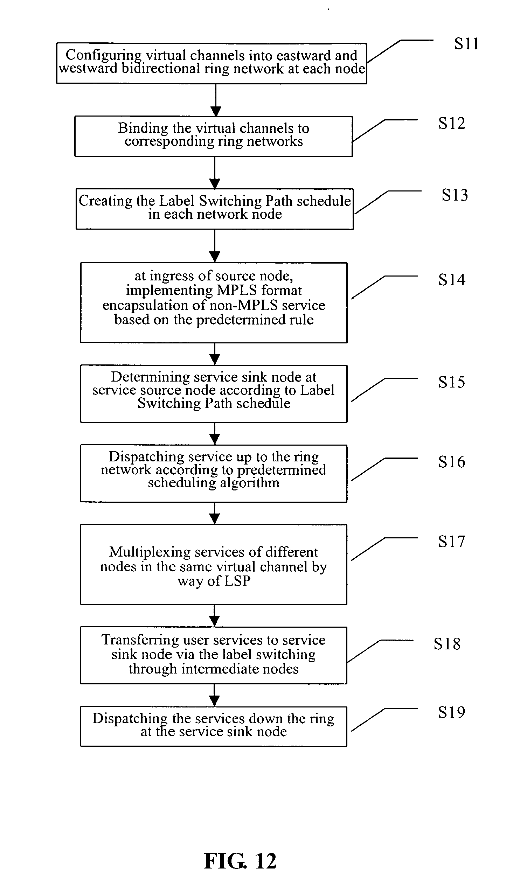

The procedure of transmitting a user service with this ring network will be detailed below with reference to FIG.12, so that the solutions according to the present invention may be better understood by those skilled in the art. The procedure includes the following steps:

S11: configuring the virtual channels on the nodes to form an eastward and westward bidirectional ring network. That is, the virtual channels are established in the same logic layer, and are allocated with a certain bandwidth, thus forming the eastward ring and the westward ring. A variety of technologies can be adopted in the establishment of the virtual channels, for example, MPLS LSP is adopted to form the virtual channel between the MPLS service convergence layer and the data link layer, and the physical or logic sub-channels in the physical layer can also be established based on physical links or logic sub-channels, so that the virtual MPLS ring network evolves into an MPLS ring network based on the physical links or the logic sub-channels, such as, the MPLS ring network based on GE connection or the MPLS ring network based on VCG connection.

S12: binding the virtual channels with the corresponding rings. Multiple virtual MPLS rings can be established in an actual physical network, and each port may contain multiple virtual channels, therefore, each of the established virtual channels should be bound to the corresponding ring. Then, a completed loop is formed by multiple adjacent or non-adjacent ports in the physical network via the established virtual channels. The various services accessing the service layer are firstly adapted to the virtual channel multiplexing layer via the MPLS encapsulation, and then is adapted to the physical layer via the encapsulation of the data link layer.

S13: creating the Label Switching Path schedules on the nodes. A Label Switching Path schedule may contain the information such as the label action and the destination port etc. The label action may include label pop-up, label adding and label switching. A table may be created in a static configuration mode, or it may be created and maintained with LDP (Label Distributing Protocol) protocol and RSVP (Resource Reservation Protocol) protocol, or it may also be created in a combination of the above two ways.

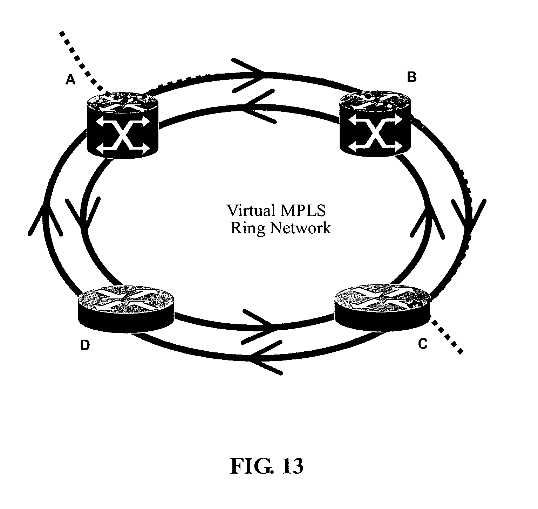

S14: accomplishing the MPLS (Multi Protocol Label Switching) encapsulation of the non-MPLS services according to the predetermined rule at ingress of service source node. The detailed procedure may refer to FIG.13, in which the ring network includes four nodes A, B, C, D. At the ingress of the source node A, a non-MPLS service is classified. The non-MPLS service is classified into different FEC (Forwarding Equivalence Class) according to the predetermined rule. An appropriate label is inserted into the header of the packet according to the FEC of the packet. Thus, the encapsulation of MPLS (Multi Protocol Label Switching) is accomplished. The predetermined rule is specified by the user, for example, the non-MPLS service can be classified according to the destination address and QOS (Quality of Service) requirement etc. This step is not necessary for an MPLS service.

S15: determining the service sink node at the service source node according to the Label Switching Path schedule. More particularly, a label action is performed (label pop-up, label adding, and label switching) according to the Label Switching Path schedule, then the egress port is found out, that is, service sink node is determined.

S16: dispatching the service up to the ring network according to the predetermined scheduling algorithm. For example, the user service can be dispatched up to the ring network according to a strict priority scheduling algorithm, so as to provide better service for the user.

S17: multiplexing the services of different nodes into a same virtual channel in the way of the Label Switching Path. The services multiplexed in the virtual channel can be borne via different physical links, for example, the above mentioned VCAT of SDH/SONET which maps the multiplexed services into the VC (Virtual Container) of SDH/SONET via the encapsulations such as GFP/LAPS/HDLC or the like, or an Ethernet may be taken as a physical link to bear the multiplexed services which will be transmitted via GE ports of the routers.

S18: performing a label switching through the intermediate nodes to transmitted the user services to the service sink node. In FIG.13, for example, a label switching is performed through the intermediate node B, and then the services are forwarded to the next node C promptly.

S19: dispatching the services down to the ring network at the service sink node. Referring to FIG.13, at the sink node C, it is known that this node is the sink node of the Label Switching Path upon looking up the Label Switching Path schedule; and the user services are dispatched down the ring network for further processing of the client layer signal.

The ring network in the embodiment of the present invention utilizes the standard MPLS frame format to transmit the user service, so that the service is independent on the ring network. Therefore, a device outside the ring network can identify the user frames of this ring network without any further processing, thereby facilitating the inter-ring end-to-end service provision and the intercommunication when multiple rings are intersected/ tangent.

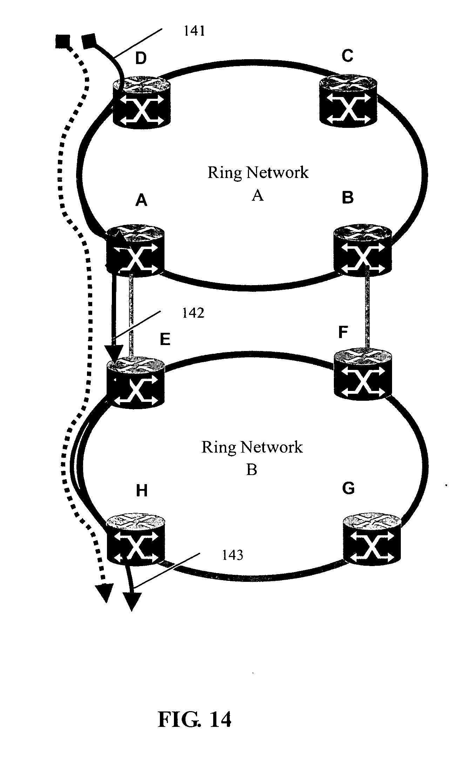

FIG. 14 is a schematic diagram illustrating the implementation of an inter-ring service going up/down the ring network according to an embodiment of the present invention;

A service across a ring network A and a ring network B according to the present invention are shown. The ring network A includes four nodes: the nodes A, B, C, D; the ring network B includes four nodes: the nodes E, F, G, H. The reference number 411 is referred as the actual path of the service on the ring network A, the reference number 412 is referred as the actual path of the service across the two rings, and the reference number 413 is referred to the actual path of the service on the ring network B. Each of the paths 411, 412 and 413 corresponds to an LSP respectively when they are implemented. That is, there is an LSP:LSP1 from the node D to the node A on the ring network A; there is an LSP:LSP3 from the node E to the node H on the ring network B; there is another LSP:LSP2 from the node A to the node E across the two rings. The label switching from LSP1 to LSP2 and the label switching from LSP2 to LSP3 are implemented on the node A and node E respectively.

Accordingly, it can be seen that, the inter-ring service can be scheduled by utilizing the LSP scheduling of MPLS, without the need of any other transformation.

When multiple rings are intersected or tangent, the procedure for transmitting an inter-ring service is similar to the above, thus will not be detailed herein.

In an embodiment of the present invention, several protection measures for the ring network are employed, in order to ensure the normal operation of the network. The protection measures are as following:

1. The protection based on service LSP (the protection of Label Switching Path)

(1) The protection of a service inside a ring: the MPLS OAM (Operation and Maintenance) function is used to implement the 1:1 or 1+1 protection of LSP.

Particularly, a working LSP and a standby LSP are configured in reverse directions (for example, the working LSP may be configured in a westward ring, and the standby LSP in an eastward ring); when a fault occurs in the working LSP, this condition may be detected in time by the OAM function of MPLS; then the standby LSP is started.

(2) The protection of an inter-ring service: the MPLS OAM function is employed to implement the 1:1 or 1+1 protection of LSP.

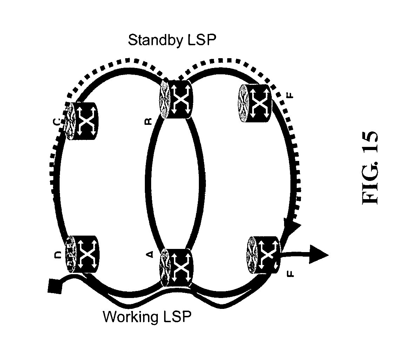

As shown in FIG.15, particularly, a working LSP and a standby LSP extend across different links of the intersected rings; when a fault occurs in the working LSP, this condition may be detected in time by the OAM function of MPLS; then the standby LSP is started.

The OAM function of MPLS mentioned above will be described briefly below:

The OAM (Operation and Maintenance) of MPLS is guaranteed mainly by the MPLS OAM frame which is defined in ITU-T Rec. Y.1711. At present, the defined frame types are CV (Connectivity Verification), FDI (Forward Defect Indication), BDI(Backward Defect Indication), performance packet, ring back request and ring back response, in which, however, the particular formats and operation specifications of only three types, i.e., CV, FDI, BDI, are defined.

(a) Connectivity Verification: a CV flow is generated in the source LSR of LSP, sent at the speed of 1/S, and terminated in the sink LSR of LSP. A CV packet carries an only identifier (TTSI, Trail Termination Source Identifier) of the network, so that the basis, on which all the defects may be detected, is established.

(b) Forward Defect Indication: the generation of an FDI packet is as the response to the action of detecting a fault (for example, a defect from a CV flow), whose main purpose is to suppress the alerts from the layered network above the layer where the fault is detected;

(c)Backward Defect Indication: a BDI flow is inserted on the returning channel (such as a returning LSP), for notifying the uplink LSR (the source point of the forward LSP) of the defect detected in the sink point of the downlink LSP of LSR(Label Switching Router).

2. The protection based on network

The protection of a conventional ring network typically includes two types, i.e., Wrapping and Steering.

The virtual MPLS rings in the present invention can be classified into two types, i.e., the unidirectional protection ring and the bidirectional protection ring, according to the mode of a service going up/down the nodes. The former specifies one of two reverse-directional rings to be used as the working channel for the service transmission in the normal conditions, and the up/down of service is implemented in the working channel all the time; the other ring is used as the standby channel for the protection of the working channel in the case that a fault occurs in the working channel. The bidirectional protection ring can transmit a service in two directions at the same time; the service goes along the short path in the normal conditions, and goes along the long path when a fault occurs.

Both of the Wrapping and the Steering protection modes may be adopted in the protection of the MPLS ring, and will be detailed respectively below.

(1) The Wrapping protection:

The Wrapping protection does not need the help of signaling, it only needs to detect the condition of the channel link at the service layer. In an event that an SF (Signaling Failure) occurs at the service layer, the channel corresponding to one side of the fault point may bridge between the working channel and the protection channel.

The particular procedure of implementation is as follows:

I. The topology information is exchanged via signaling among the nodes of the ring network, so that each node knows the state of the network (optional);

II. In the case that a fault occurs on the fiber of the ring network, the nodes at the two ends of the fault point of the fiber may detect the defect information and the location;

III. The nodes at the two ends of the fault point of the fiber send a control signaling in the fiber direction to notify the other nodes (optional);

IV. At the neighbor nodes where the defect occurs, the service is ringed back respectively to another virtual channel loop for transmission;

V. During the ring protection switching, the services are switched into the reverse-direction channel in turn according to the different service level of the traffic flow.

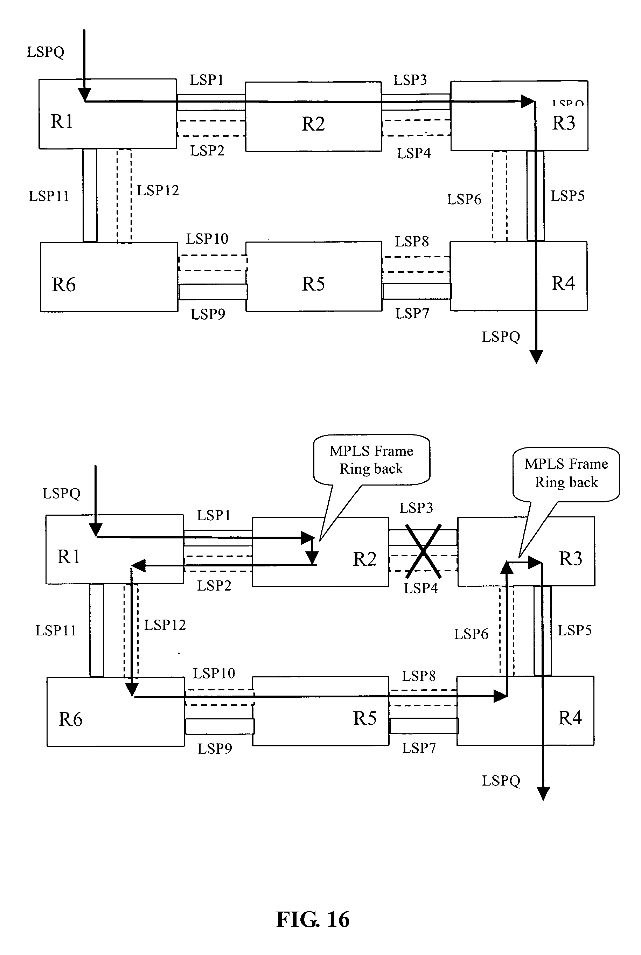

FIG.16 illustrates the procedure for implementing the unidirectional Wrapping protection in which LSP is used as the bearer layer:

LSP1, LSP3, LSP5, LSP7, LSP9 and LSP11 constitute a westward ring of an MPLS ring, which is used as the working channel and transmits the service clockwise. LSP2, LSP4, LSP6, LSP8, LSP 10 and LSP 12 constitute an eastward ring of the MPLS ring, which is used as the protection channel and transmits the service anticlockwise. LSPQ is a service from the node R1 to R4, and in the normal operation, it passes through R2 and R3 clockwise, and is transmitted to the node R4 and is stripped by the destination node R4. In the case that a fault occurs in LSP3 or/and LSP4 channel, each of R2 and R3 may bridge the working channel and the protection channel at one side that is adjacent to the fault point. Thus, the LSPQ, which is originally to be encapsulated at the node R2 into the tunnel LSP3 and sent to R3, is encapsulated into the protection tunnel LSP2 and sent anticlockwise to R1 when the fault occurs. Then it reaches R3 through the protection channel of R6, R5 and R4. At R3, it is switched into the working channel and encapsulated in the tunnel LSP5, and sent clockwise to R4. It is stripped when R4 discovers that it is a local service. The working channel can transmits additional services if the network is in the normal condition.

(2) The Steering protection :

The Steering protection needs the help of signaling. Typically in the normal conditions, a service goes along the short path. In the case that a fault occurs in the network, the service route is recalculated through topology discovery.

The particular procedure of implementation is as followings:

I. The topology information is exchanged via signaling among the nodes of the ring network, so that each node knows the state of the network (optional);

II. In the case that a fault occurs on the ring network fiber, the nodes at the two ends of the fault point of the fiber send a control signaling to notify the other nodes of the information about the affected LSP;

III. On receipt of the information, the source node of the corresponding service LSP redirects the service LSP to another virtual channel ring for transmission, thus implementing the Steering protection.

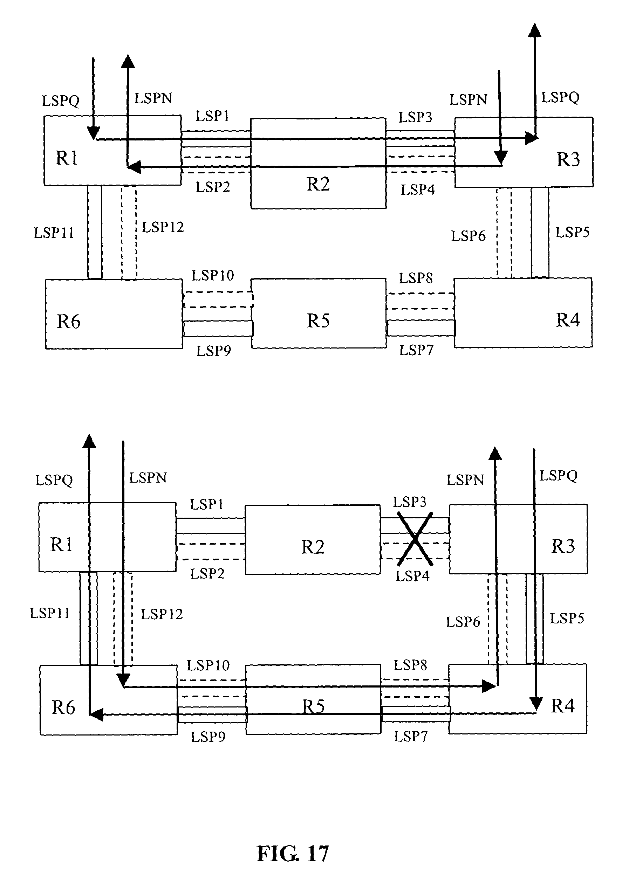

FIG.17 illustrates the procedure for implementing the Steering protection of a bidirectional protection ring in which LSP is used as the bearer layer:

LSP1, LSP3, LSP5, LSP7, LSP9 and LSP11 constitute a westward ring which transmits a service clockwise. LSP2, LSP4, LSP6, LSP8, LSP10 and LSP12 constitute an eastward ring which transmits a service anticlockwise. LSPQ and LSPN are two services between the nodes R1 and R3. In the normal condition, LSPQ passes through R2 and R3 clockwise and is stripped by R3, while LSPQ passes through R2 to R1 anticlockwise and is stripped by R1. In the case that a fault occurs in LSP3 or/and LSP4 channel, R1 discovers that LSPQ can not be reached via topology rediscovery, and switches LSPQ to the eastward ring, that is, the service will be transmitted anticlockwise to R3, through R6, R5 and R4, and then be stripped by R3. If R3 discovers that LSPN can not be reached clockwise, it will switch LSPN to the westward ring, and transmit the service clockwise to R1 via R4, R5 and R6, and the service will be stripped by R1. In the Steering protection mode, a protection bandwidth should be reserved on each of the two rings so as to protect the working services in the event of a fault. In the normal conditions, additional services may be transmitted with the reserved bandwidth.

In Wrapping protection mode, the switching speed is rapid, the topology information is not required, however the service is wrapped in the network upon switching, resulting in the low utilization of bandwidth. While in the Steering protection mode, the bandwidth utilization is high, but the network topology information is required, as a result, in the event of a fault, the optimum route can not be found until a topology rediscovery is made, which results in a longer switching time.

The Wrapping + Steering mode provides a better solution to avoid the low bandwidth utilization in the Wrapping mode and the long switching time in the Steering mode. Particularly, the method for implementation is as following: In the normal conditions, a service goes along the short path. In the case that a fault occurs in the network, the nodes at the two sides of the fault point proceed with the Wrapping switching first, and a topology rediscovery at the same time. On obtaining the new network topology information, the source node of the service calculates the route according to the topology information, and selects a short path for transmission. With this mode, the protection speed of the network, as well as the utilization of bandwidth, may be improved.

The above described Steering mode needs network topology information, and needs to wait for topology rediscovery so as to find the optimum route in the event of a network fault. The virtual MPLS ring network according to an embodiment of the present invention may, but not necessarily, have the function of automatic network topology discovery.

The function of automatic network topology discovery is that, the changes of network topology may be discovered automatically, and the new topology information may be sent to each node on the ring in time. The topology discovery function of an MPLS ring network can be implemented by defining an MPLS OAM packet.

a) In an MPLS ring network which takes MPLS Tunnel LSP as the bearer layer, the topology information can be propagated to the adjacent nodes in the form of OAM packet. At present, there are 5 MPLS OAM frames which have been constituted, and a new OAM frame may be defined to bear the topology information of the ring network and transmit the topology information to the adjacent nodes in Tunnel LSP.

b) In an MPLS ring network which takes the physical channel or the sub-channel as the bearer layer, a private LSP can be defined for the transmission of the topology information between the adjacent nodes.

To provide the user service with a better service quality, the EXP (experiment) field of MPLS label is employed in the present invention(the usage of this field is not defined in the specifications; this field that contains 3 bits and is usually utilized as the priority may identify 8 levels of priority), so that different LSPs can define different QoS parameters, thus providing a richer SLA (Service Level Agreement), and the differentiated QoS may be better supported and guaranteed by scheduling the LSP grain according to the pre-negotiated parameters. The detailed steps of implementation are as following:

I. Performing a stream classification to a service going up the ring locally at the source node.

II. Filling the EXP field of MPLS according to the stream class level:

a) Performing MPLS encapsulation to the non-MPLS traffic flow. The value of the EXP field of MPLS format is determined according to a certain algorithm. For example, a stream classification for the service is performed according to the information, such as, the pri(priority) field( the field contains 3 bits, representing 8 priorities) of a VLAN (Virtual Local Area Network) service, and/or TOS ( Type Of Service ) field of an IP (Internet Protocol) service (the field identifies the classification of an IP service, such as, video service and the like), and/or the priority specified by the administrator etc. One or any combination of the above mentioned information can be selected according to the requirement; for example, in the case that the TOS of a service is a video service, if the VLAN is also of a high priority, the service is defined as the first priority; and if the VLAN is of a lower priority, the service is defined as the second priority, and so on.

b) Selecting to use the existing EXP field or re-designate an EXP field for the MPLS traffic flow according to the requirement.

c) Filling the EXP field, only for the services up the ring locally, in which the same algorithm is employed for all the nodes on the ring.

III. Dispatching the user services to different outlet port queues according to the different priorities specified by the EXP fields.

IV. Dispatching the queues of different priorities with a certain algorithm and policy (the scheduling algorithms, such as, the strict priority scheduling algorithm etc) to the outlet port. In other words, the services enter the ring for transmission.

As the bandwidth of the ring in the ring network is a shared resource, it is very likely to be overused by a certain node or a certain user, which results in the network paralysis. Thus, in the ring network according to an embodiment of the present invention, the service bandwidth information of each node is collected by signaling, and a certain fair algorithm is utilized to control the service up the ring at each station, so that all stations can share the ring bandwidth fairly. The detailed steps are as followings:

I. A private LSP is established between two adjacent points on the ring for transmission of the fair algorithm protocol information;

II. The MAC layer of each node observes the utilization condition of the links close to it all the time, and then notifies all the nodes on the ring of this information;

III. The ring network executes the fair algorithm with the coherent mechanism (depending on the fair algorithm adopted), so as to control the utilization of bandwidth. The fair algorithm is a mechanism which allows each user on the ring to share the bandwidth fairly, it allocates the whole bandwidth on the ring to the users as a global resource, which is different from SDH/SONET in which a fixed bandwidth is allocated to each user. Each node can get to know the data amount that is allowed to be sent onto the ring according to the result of the fair algorithm;

IV. A feedback mechanism is established, and the rate, at which the source node sends data to the network, is adjusted according to the result of the previous step. Thus, the fair sharing of the bandwidth on the ring is implemented.

It can be seen that, the ring network according to an embodiment of the present invention has more advantages than the RPR ring network, such as, the simplicity of service processing, the high efficiency, the implementation of the inter-ring end-to-end service provision, the service intercommunication when multiple rings are intersected/tangent, richer SLA(Service Level Agreement) supported and adequate utilization of OAM function in MPLS, and the like.

While the present invention has been described with reference to some embodiments of the present invention, those skilled in the art shall appreciate that various changes and modifications in any aspect can be made without departing from the spirit and scope of the present invention, and these changes and modifications shall be encompassed in the scope as defined by the accompanying claims provided that they fall within the spirit of the present invention.

## Claims

1. A ring network, comprising:
multiple nodes in a same logic layer, for accessing a service to the ring network or receiving a service from the ring network;
two virtual channels of reverse directions, which connect the adjacent nodes and are utilized to bear and adapt service data;
a physical link, which is utilized to bear the service data adapted to the virtual channel.

2. The ring network according to claim 1, wherein the virtual channel is a Label Switching Path ( LSP ) based on Multiple Protocol Label Switching ( MPLS ).

3. The ring network according to claim 1, wherein the virtual channel is a virtual channel connection of Asynchronous Transfer Mode (ATM).

4. The ring network according to any one of claims 1 to 3, wherein the nodes adapt the service data, which is borne and adapted to the virtual channel, to the physical link via Ethernet MAC ( Media Access Control ) protocol, GFP(Generic Framing Protocol), LASP (Link Access Procedure) or HDLC (High Speed Digital Link Control) connection.

5. The ring network according to claim 1, wherein the physical link comprises an Ethernet link, a Synchronous Data Network link, an Optical Transport Network link and a Virtual Concatenation Group.

6. The ring network according to claim 1 or 5, wherein the physical link is located in a ring network and/or intersected rings and/or a mesh network.

7. The ring network according to claim 1, wherein the service comprises an internet service, an Ethernet service and an ATM (Asynchronous Transfer Mode) service.

8. The ring network according to claim 1, wherein an encapsulation format of the service data accessed or received by the nodes is the standard format of MPLS.

9. A method for implementing the service of the ring network according to claim 1, the ring network comprises: multiple nodes in a same logic layer, for accessing a service to the ring network or receiving a service from the ring network; two virtual channels of reverse directions, which connect the adjacent nodes and are utilized to bear and adapt service data;; a physical link, which is utilized to bear the service data adapted to the virtual channel; wherein the method comprises:
A. configuring the virtual channels at the nodes to form an eastward and westward bidirectional ring network;
B. establishing service Label Switching Path schedules at the nodes;
C. determining a service sink node according to the Label Switching Path schedule at a service source node;
D. dispatching services up to the ring network according to a predetermined algorithm;
E. multiplexing the services of different nodes in a same virtual channel for transmission in the way of Label Switching Path;
F. dispatching the services down the ring network at the service sink node.

10. The method according to claim 9, wherein the method further comprises: performing a Wrapping protection and/or a Steering protection for the ring network.

11. The method according to claim 9 or 10, wherein the step A further comprises: binding the virtual channels to the corresponding ring networks.

12. The method according to claim 11, wherein the step B comprises: configuring and maintaining the service Label Switching Path schedules statically and/or dynamically.

13. The method according to claim 12, wherein the process of configuring and maintaining the service Label Switching Path schedules dynamically comprises: configuring and maintaining the service Label Switching Path schedules by utilizing the Label Distribution Protocol and the Resource Reservation Protocol.

14. The method according to claim 11, wherein the service Label Switching Path schedule comprises: the label action information and the destination port information.

15. The method according to claim 11, wherein the step C further comprises:
implementing Multiple Protocol Label Switching (MPLS) encapsulation of a non-MPLS service.

16. The method according to claim 15, wherein the predetermined rule comprises:
classifying the non-MPLS (Multiple Protocol Label Switching) service packet into different Forwarding Equivalence Classes (FEC) according to destination address, inserting an appropriate label into the header of the packet according to Forwarding Equivalence Class (FEC) to which the packet belongs, and accomplishing the MPLS(Multiple Protocol Label Switching) encapsulation;
classifying the non-MPLS (Multiple Protocol Label Switching) service packet into different Forwarding Equivalence Classes (FEC) according to the requirement of Quality of Service, inserting an appropriate label into the header of the packet according to Forwarding Equivalence Class (FEC) to which the packet belongs, and accomplishing the MPLS(Multiple Protocol Label Switching) encapsulation.

17. The method according to claim 11, wherein the predetermined algorithm comprises:
strict priority scheduling method.

18. The method according to claim 11, wherein the method further comprises: adopting 1:1 and/or 1+1 protection of the service Label Switching Path for a service inside the ring and an inter-ring service.

19. The method according to claim 11, wherein the method further comprises:
performing a stream classification to a service, which enters the ring locally, at the source node;
filling the EXP (experiment) field of MPLS(Multiple Protocol Label Switching) according to the level of stream class; and
dispatching the service, which enters the ring locally, to corresponding outlet port queue for transmission, according to the priority indicated by the EXP field.

20. The method according to claim 19, wherein the information of the stream class comprises: priority field of the virtual local network service, and/or service type field of Internet Protocol service, and/or priority specified by an administrator.

21. The method according to claim 11, wherein the method further comprises:
establishing a private Label Switching Path between the adjacent nodes on the ring network for transmission of fair algorithm protocol information;
observing utilization condition of the link which is connected to each of the nodes on the ring network by the MAC(Media Access Control) layer of this node, and notifying all the nodes on the ring network of the observed condition; and
adjusting the transmission rate, at which each node on the ring network sends data to the ring network, according to the fair algorithm protocol and the obtained notice.
